# EUROPEAN PATENT APPLICATION

(11) **EP 3 428 871 A1**
(43) Date of publication of application: **16.01.2019**
(21) Application number: 17762745.2
(22) Date of filing: 27.01.2017
(51) Int. Cl.: G06Q 50/10, G06F 17/30

(54) **SENSOR NETWORK INTER-APPARATUS ASSOCIATION DEVICE, SENSOR NETWORK INTER-APPARATUS ASSOCIATION METHOD, SENSOR NETWORK INTER-APPARATUS ASSOCIATION PROGRAM, AND RECORDING MEDIUM WHEREUPON PROGRAM IS STORED**

(30) Priority: 10.03.2016 JP 2016047023
(71) Applicant: Omron Corporation, Kyoto-shi, Kyoto 600-8530 (JP)
(72) Inventor: YAMADA, Ryota, Kyoto-shi Kyoto 600-8530 (JP)
(74) Representative: Horn Kleimann Waitzhofer Patentanwälte PartG mbB
(86) International application number: PCT/JP2017/003006
(87) International publication number: WO 2017/154399

(57) **Abstract**

An inter-device coordination apparatus (10) includes an action detection unit (11), a state information detection unit (12), a situation change detection unit (13), and a co-occurrence relation extraction unit (14). The action detection unit (11) detects an action performed by a person. The state information detection unit (12) detects a state of an environment including the person. The situation change detection unit (13) detects a change in the state of the environment including the person that is detected by the state information detection unit (12). The co-occurrence relation extraction unit (14) extracts, for the action that is detected by the action detection unit (11) and the situation change that is detected by the situation change detection unit (13), an action and a situation change that co-occur in time or spatial manner as a set in a co-occurrence relation.

## Description

### TECHNICAL FIELD

The present invention relates to an inter-device coordination apparatus in a sensor network, an inter-device coordination method, an inter-device coordination program, and a recording medium storing the program.

### BACKGROUND ART

In recent years, because of the price reduction of sensors, the spread of wireless communication, improvement in the processing performance of MCUs (Micro Control Units), and the like, devices that support sensor networks/M2M (Machine-to-Machine)/IoT (Internet of Things) have increased.

Here, programming performed by a technician who has specialized knowledge is required for devices that support sensor networks/M2M/IoT to coordinate with each other to realize valued behavior.

However, although sensors, MCUs, wireless communication modules and the like have become progressively cheaper and devices that can coordinate with each other have increased, specialized knowledge is required to actually coordinate the devices, and thus use of these devices has not expanded.

For this reason, even though devices that support sensor networks/M2M/IoT have become more widespread, because specialized knowledge is required to handle these devices, the reality is that these devices are hardly utilized.

For example, Patent Document 1 discloses a platform for realizing an application that operates based on conditional judgment on a mobile terminal, based on the input of rules by a user.

In this platform, a mechanism for receiving rules to be used in conditional judgment and generating an application is provided, as a platform for creating an application based on conditional judgment.

However, the above conventional configuration has the following problem.

That is, in the configuration disclosed in the above Patent Document 1, although knowledge required in programming for developing an application is not needed, the user is required to understand and create rules to be used in conditional judgment.

### RELATED ART DOCUMENT

### PATENT DOCUMENT

Patent Document 1: US 2014/0351800

### SUMMARY OF THE INVENTION

The present invention aims to provide an inter-device coordination apparatus in a sensor network that can realize valued behavior by showing desirable behavior through an action, even by a general user who has no specialized knowledge, an inter-device coordination method, an inter-device coordination program, and a recording medium storing this program.

### MEANS FOR SOLVING THE PROBLEMS

An inter-device coordination apparatus in a sensor network according to a first invention includes an action detection unit, a state information detection unit, a situation change detection unit, and a co-occurrence relation extraction unit. The action detection unit detects an action performed by a person. The state information detection unit detects a state of an environment including the person. The situation change detection unit detects a change in the state of the environment including the person that is detected by the state information detection unit. The co-occurrence relation extraction unit extracts, for the action that is detected by the action detection unit and the situation change that is detected by the situation change detection unit, an action and a situation change that co-occur temporally or spatially as a set in a co-occurrence relation.

Here, actions performed by the person that are detected by the above action detection unit include various kinds of actions corresponding to the situation change, such as an action of entering and leaving a room, an action of turning off an air conditioner or lighting in a conference room, an action of changing a temperature setting of an air conditioner, and an action of transferring a file in a mobile terminal to a backup server.

Also, state information that is detected by the state information detection unit includes, for example, information relating to the state of the environment including the person.

Note that, as the state information, for example, a change in the use situation of the conference room can be detected using a detection result from a motion sensor, a detection result from an illuminance sensor, a detection result from a temperature sensor, various types of sensors such as a sensor for detecting opening/closing of a door, a surveillance camera, and the like.

Furthermore, as the situation change that is detected by the situation change detection unit, for example, a change in the use situation of the conference room (going in and out of a person, a temperature change, an illuminance change, etc.), a situation in which a smartphone or a tablet terminal is placed at a predetermined position, a change in the number of people in an automobile and the like are included.

Note that, for example, a change in the use situation of the conference room can be detected using the detection result from a motion sensor, the detection result from an illuminance sensor, the detection result from a temperature sensor, various types of sensors such as a sensor for detecting opening/closing of the door, a surveillance camera, and the like.

Also, for example, the placement of a portable terminal such as a smartphone at a predetermined position can be detected using a detection result from an acceleration sensor and a GPS (Global Positioning System) mounted in the portable terminal, a radio wave sensor that can detect radio waves from a mobile phone, and the like.

In addition, for example, a change in the number of people in an automobile can be detected using a motion sensor, a weight sensor, information of an image in which the inside of the automobile is captured, and the like.

The co-occurrence relation that is extracted by the above co-occurrence relation extraction unit means, for example, if a number of situation changes occur with regard to a certain action, the relation between the certain action and a situation change relating to the certain action with an occurrence probability equal to or higher than a predetermined percentage. In other words, if there is a situation change that occurs with a probability equal to or higher than the predetermined percentage in conjunction with a certain action, it is determined that a co-occurrence relation exists between that action and that situation change.

For example, if a change in the use situation of the conference room is detected, an action of turning off an air conditioner, an action of turning off lighting, an action of switching off a projector and the like are conceivable as actions having a co-occurrence relation.

Also, for example, if it is detected that a portable terminal such as a smartphone is placed at a predetermined position, an action of transferring a file to a backup server, an action of switching off the portable terminal, an action of turning off the screen, an action of turning off Wi-Fi, and the like are conceivable as actions having a co-occurrence relation.

Furthermore, for example, if a change in the number of people in an automobile is detected, an action of changing a temperature setting of an air conditioner, an action of opening/closing a widow of a rear seat, an action of changing audio settings, and the like are conceivable as actions having a co-occurrence relation.

Accordingly, if a situation change satisfying a predetermined condition is detected, actions having a co-occurrence relation with the situation change can be extracted. That is, if actions having a co-occurrence relation can be extracted, it can be detected that there is a possibility that actions that should occur in conjunction with a certain situation change have not been performed.

For example, if a change in the use situation of a conference room is detected, actions such as turning off the air conditioner are extracted as actions having a co-occurrence relation, and it is possible to notify the user about forgetting to turn off the air conditioner, lighting, projector and so on, or to vicariously execute the actions of turning off these devices.

Also, for example, if it is detected that a portable terminal such as a smartphone is placed at a predetermined position, the actions of transferring a file to a backup server, switching off the portable terminal, turning off the screen, turning off Wi-Fi, and the like are extracted as actions having a co-occurrence relation, and these actions can be automatically executed.

Furthermore, for example, if a change in the number of people in an automobile is detected, the actions of changing the temperature setting of the air conditioner and the like can be extracted as actions having a co-occurrence relation, and these actions can be automatically executed.

As a result, for example, if a situation change having a co-occurrence relation with a specific action is detected, it is possible to perform inter-device coordination control in which various types of devices included in the sensor network are coordinated so as to confirm vicarious execution of the action with the user, or so as to automatically perform the action vicariously.

An inter-device coordination apparatus in a sensor network according to a second invention is the inter-device coordination apparatus in the senor network according to the first invention, and further includes a value determination unit configured to determine presence or absence of value relating to the co-occurrence relation that is extracted by the co-occurrence relation extraction unit.

Here, it is determined whether the co-occurrence relation that is extracted by the above co-occurrence relation extraction unit has value.

The determination of whether the co-occurrence relation has value is performed, for example, for a certain action, according to whether there is a situation change that occurs with a probability equal to or higher than a predetermined percentage with that action in a case where a number of situation changes occur. In other words, if the certain action occurs in conjunction with a certain situation change with a probability equal to or higher than the predetermined percentage, it can be determined that the co-occurrence relation has value. Then, a period for determining whether the action occurs in conjunction with that situation change with a probability equal to or higher than the predetermined percentage can be suitably set.

In this manner, it is possible to perform the inter-device coordination control only for a co-occurrence relation determined to be valued among the co-occurrence relations extracted by the co-occurrence relation extraction unit, so as to confirm vicarious execution of the action with the user, or so as to automatically perform the action vicariously.

An inter-device coordination apparatus in a sensor network according to a third invention is the inter-device coordination apparatus in the sensor network according to the second invention, and further includes a valued logic generation unit configured to generate, when the value determination unit determines that the co-occurrence relation has value, a logic for automatically performing an operation corresponding to the action detected by the action detection unit, if a detection result from the situation change detection unit satisfies a predetermined condition.

Here, if a situation change constituting a co-occurrence relation that is determined to be valued by the above value determination unit is detected, a logic for automatically performing the action constituting the co-occurrence relation is generated.

In this manner, for example, if a change in the use situation of a conference room (a change in the detection result from a motion sensor or a door open/close sensor, a change in a use schedule table of the conference room, etc.) is detected, a logic for automatically performing actions having a valued co-occurrence relation, such as switching on or off devices including the air conditioner, lighting apparatus and projector, can be generated.

Also, for example, if it is detected that a portable terminal such as a smartphone is placed at a predetermined position, a logic for automatically performing the actions of transferring a file to a backup server, switching off the portable terminal, turning off the screen, turning off Wi-Fi, and the like which have a valued co-occurrence relation can be generated.

Furthermore, for example, if a change in the number of people in an automobile is detected, a logic for automatically performing the actions of changing the temperature setting of the air conditioner and the like that have a co-occurrence relation can be generated.

As a result, for example, if a situation change having a co-occurrence relation with a specific action is detected, it is possible to generate a logic for vicariously executing the action, and provide the logic externally or execute the logic.

An inter-device coordination apparatus in a sensor network according to a fourth invention is the inter-device coordination apparatus in the sensor network according to the third invention, and further includes an output unit configured to output the logic that is generated by the valued logic generation unit.

Here, the logic that is generated by the valued logic generation unit is output externally.

In this manner, if a situation change having a co-occurrence relation with a specific action is detected, the logic that is generated for vicariously performing the action can be provided externally (to another device, the Internet, etc.) as an application to be executed by the other device, for example.

An inter-device coordination apparatus in a sensor network according to a fifth invention is the inter-device coordination apparatus in the sensor network according to the fourth invention, and the output unit outputs, to the user, information including a proposal for vicariously performing the action, based on the logic generated by the valued logic generation unit.

Here, regarding the logic generated by the valued logic generation unit, information including a proposal for vicariously performing a specific action included in the logic is output externally.

Accordingly, rather than executing the logic generated by the valued logic generation unit unconditionally, it is possible to more effectively execute only actions that are beneficial to the user, by making an inquiry to the user regarding permission for execution.

Note that a response from the user who received the proposal for vicariously performing the action is stored, and it may be determined, at the time of executing a logic generated under the same condition from the next onward, whether to automatically execute the logic based on the response information from the user.

An inter-device coordination apparatus in a sensor network according to a sixth invention is the inter-device coordination apparatus in the sensor network according to the fourth or fifth invention, and further includes a value determination unit configured to determine presence or absence of value regarding the co-occurrence relation that is extracted by the co-occurrence relation extraction unit. The output unit outputs a message for confirming, with the user, the presence or absence of value relating to the co-occurrence relation that is determined by the value determination unit.

Here, the determination result from the value determination unit that performs value determination relating to the co-occurrence relation is presented to the user for confirmation.

In this manner, for example, if a situation change having a co-occurrence relation with a specific action is detected, processing such as outputting the logic externally or automatically executing the logic can be performed, after the user has confirmed the presence or absence of value of the co-occurrence relation including that action.

An inter-device coordination apparatus in a sensor network according to a seventh invention is the inter-device coordination apparatus in the sensor network according to any one of the third to fifth inventions, and further includes an application generation unit configured to generate a program based on the logic that is generated by the valued logic generation unit.

Here, a program for automatically performing the action constituting the co-occurrence relation is generated, based on the logic that is generated by the valued logic generation unit.

In this manner, if a situation change having a co-occurrence relation with a specific action is detected, the action is automatically performed vicariously, by a computer executing the program that is generated for vicariously performing the action.

Also, the program that is generated by the application generation unit can also be provided to another device via the Internet, for example.

An inter-device coordination apparatus in a sensor network according to an eighth invention is the inter-device coordination apparatus in the sensor network according to the second invention, and the value determination unit determines the presence or absence of value relating to the co-occurrence relation, according to whether a percentage at which the action occurs in conjunction with the situation change is equal to or higher than a predetermined threshold value.

Here, a predetermined threshold value is used, when determining the presence or absence of value of the co-occurrence relation.

Specifically, as the predetermined threshold value, for example, if the probability (occurrence rate) at which the action and the situation change co-occur is set to 80% or higher, it is determined that performing the action has value, if a situation change whose occurrence rate is 80% or more is detected.

In this manner, if the situation change having the co-occurrence relation with the specific action is detected, for example, it is possible to determine the presence or absence of value, by recognizing the action that the user performs with a possibility of 80% or higher as a co-occurrence relation worth performing.

As a result, it is possible to perform processing such as automatically executing only actions worth executing or providing a program for executing only actions worth executing.

An inter-device coordination apparatus in a sensor network according to a ninth invention is the inter-device coordination apparatus in the sensor network according to any one of the first to eighth inventions, and the action detection unit detects the action performed by the person, based on data that has been provided to an external database.

Here, the action constituting the co-occurrence relation that is detected by the action detection unit is retrieved from the data that has been provided to the database.

Accordingly, actions to be executed/performed or proposed by the present apparatus can be extracted and selected from the data stored in the database.

An inter-device coordination apparatus in a sensor network according to a tenth invention is the inter-device coordination apparatus in the sensor network according to any one of the first to ninth inventions, and information specifying time or space is added as meta-information to the data used by the action detection unit.

Here, meta-information for specifying time or space is added to the data used for action detection performed by the action detection unit.

In this manner, the action detection unit can detect the action constituting the co-occurrence relation, by using time information or space information that is included in the meta-information.

An inter-device coordination apparatus in a sensor network according to an eleventh invention is the inter-device coordination apparatus in the sensor network according to any one of the first to tenth inventions, and the situation change detection unit detects the situation change by using a detection result acquired by at least one of a motion sensor, a temperature sensor, an illuminance sensor, an electric energy sensor, an acceleration sensor, an air conditioner, and a location information sensor.

Here, the situation change is detected using the detection results from the above various sensors.

In this manner, for example, regarding a change in the use situation of a conference room, a situation change that use of the conference room has ended can be detected using the detection result from a motion sensor that is installed in the conference room or in the vicinity of the entrance of the conference room, a door open/close sensor, a surveillance camera provided inside or outside the conference room, and the like.

As a result, if a situation change that use of the conference room has ended is detected, an action such as switching off the air conditioner or the lighting apparatus in the conference room is extracted as the action constituting a co-occurrence relation relating to the situation change.

An inter-device coordination apparatus in a sensor network according to a twelfth invention is the inter-device coordination apparatus in the sensor network according to any one of the first to eleventh inventions, and the situation change detection unit detects the situation change by using information that is acquired by a schedule management system configured to manage various schedules.

Here, for example, the situation change is detected using various types of schedule information in the schedule management system that is provided over the Internet or an intranet.

In this manner, for example, regarding a change in the use situation of a conference room, a situation change that use of the conference room has ended can be detected using information relating to a use schedule of the conference room or the like.

As a result, if a situation change that use of the conference room has ended is detected, an action such as switching off the air conditioner or the lighting apparatus in the conference room is extracted as the action constituting a co-occurrence relation relating to the situation change.

Note that the detection of the situation change by using this schedule information may be implemented in combination with the detection of the situation change by using the detection results from the above various sensors.

An inter-device coordination apparatus in a sensor network according to a thirteenth invention is the inter-device coordination apparatus in the sensor network according to any one of the first to twelfth inventions, and the situation change detection unit detects, regarding the state of the environment including the person that is detected by the state information detection unit, a change in data in time series as the situation change.

Here, the situation change detected by the situation change detection unit is detected as the change in time series of the environment including the person that is detected by the state information detection unit.

Accordingly, a case where a change occurs in the environment in time series can be detected as a situation change.

An inter-device coordination method in a sensor network according to a fourteenth invention includes an action detection step, a state information detection step, a situation change detection step, and a co-occurrence relation extraction step. In the action detection step, an action performed by a person is detected. In the state information detection step, a state of an environment including the person is detected. In the situation change detection step, a change in the state of the environment including the person that is detected by the state information detection step is detected. In the co-occurrence relation extraction step, for the action that is detected by the action detection step and the situation change that is detected by the situation change detection step, an action and a situation change that co-occur temporally or spatially are detected as a set in a co-occurrence relation.

Here, if a situation change that satisfies a predetermined condition is detected, the action relating to the situation change is extracted as a co-occurrence relation.

Here, actions performed by a person that are detected in the above detection steps includes various kinds of actions corresponding to the situation change, such as an action of entering and leaving a room, an action of turning off the air conditioner or the lighting apparatus in a conference room, an action of changing the temperature setting of the air conditioner, and an action of transferring a file in the mobile terminal to the backup server.

Also, state information that is detected in the step of detecting a state information includes, for example, information relating to the state of the environment including the person.

Note that, as the state information, for example, a change in the use situation of a conference room can be detected using the detection result from a motion sensor, the detection result from an illuminance sensor, the detection result from a temperature sensor, various sensors such as a sensor for detecting opening/closing of the door, the surveillance camera, and the like.

Furthermore, as a situation change that is detected by the situation change detection step, for example, a change in the use situation of the conference room (going in and out of a person, a temperature change, an illuminance change, etc.), a situation in which a portable terminal such as a smartphone and a tablet terminal is placed at the predetermined position, a change in the number of people in an automobile and the like are included.

Note that, for example, a change in the use situation of the conference room can be detected using the detection result from a motion sensor, the detection result from an illuminance sensor, the detection result from a temperature sensor, various sensors such as a sensor for detecting opening/closing of the door, a surveillance camera, and the like.

Also, for, example, the fact that a portable terminal such as a smartphone is placed on the predetermined position can be detected using the detection result from the acceleration sensor and the GPS (Global Positioning System) mounted in the portable terminal, the radio wave sensor that can detect radio waves of a mobile phone, and the like.

In addition, for example, a change in the number of people in an automobile can be detected using the motion sensor, the weight sensor, image information of the image in which the inside of the automobile is captured, and the like.

The co-occurrence relation that is extracted in the above step of extracting a co-occurrence relation means, for example, if some situation changes occur for a certain action, the relation between the certain action and the situation changes relating to the certain action with an occurrence probability equal to or higher than the predetermined percentage. In other words, if there is a situation change that occurs with a probability equal to or higher than the predetermined percentage in conjunction with the certain action, it is determined that the co-occurrence relation exists between the action and the situation change.

For example, if a change in the use situation of the conference room is detected, the actions of turning off the air conditioner, the action of turning off the lighting apparatus, the action of switching off the projector and the like are conceivable as the action having the co-occurrence relation.

Also, for example, if it is detected that a portable terminal such as a smartphone is placed on the predetermined position, the actions of transferring a file to a backup server, switching off the portable terminal, lighting off the screen, turning off Wi-Fi, and the like are conceivable as the action having the co-occurrence relation.

Furthermore, for example, if a change in the number of people in an automobile is detected, the actions of changing the temperature setting of the air conditioner, opening or closing the widow of the rear seat, changing the audio equipment setting, and the like are conceivable as the action having a co-occurrence relation.

Accordingly, if the situation change satisfying the predetermined condition is detected, the action having the co-occurrence relation with the situation change can be extracted. That is, if the action having the co-occurrence relation has been detected, it is possible to detect that there is a possibility that the action that should occur in conjunction with the certain situation change has not been performed.

For example, if a change in the use situation of the conference room is detected, actions such as turning off the air conditioner and the like are extracted as the action having the co-occurrence relation, and it is possible to notify the user of forgetting to turn off the air conditioner, the lighting apparatus, the projector and so on, or it is also possible to vicariously perform the action of turning off the device.

Also, for example, if it is detected that a portable terminal such as a smartphone is placed on the predetermined position, actions such as transferring a file to a backup server, switching off the portable terminal, lighting off the screen, turning off Wi-Fi are extracted as the action having the co-occurrence relation, and these actions can be automatically executed.

Furthermore, for example, if a change in the number of people in an automobile is detected, actions such as changing the temperature setting of the air conditioner are extracted as the action having the co-occurrence relation, and these actions can be automatically executed.

As a result, for example, if the situation change having the co-occurrence relation with the specific action is detected, it is possible to perform the inter-device coordination control in which various types of devices included in the sensor network are coordinated, so as to confirm, to the user, vicariously performing the action, or so as to automatically perform the action vicariously.

An inter-device coordination program in a sensor network according to a fifteenth invention causes a computer to perform an inter-device coordination method in the sensor network including an action detection step, a state information detection step, a situation change detection step, and a co-occurrence relation extraction step. In the action detection step, an action performed by a person is detected. In the state information detection step, a state of an environment including the person is detected. In the situation change detection step, a change in the state of the environment including the person that is detected by the state information detection step. In the co-occurrence relation extraction step, for an action that is detected by the action detection step and a situation change that is detected by the situation change detection step, an action and a situation change that co-occur temporally or spatially are detected as a set in a co-occurrence relation.

Here, the actions performed by the person that are detected by the above detection steps includes various kinds of actions corresponding to the situation change, such as the action of entering and leaving the room, the action of turning off the air conditioner or the lighting apparatus in the conference room, the action of changing the temperature setting of the air conditioner, and the action of transferring a file in the mobile terminal to the backup server.

Then, state information that is detected in the step of detecting a state information includes, for example, information relating to the state of the environment including the person.

Note that, as the state information, for example, a change in the use situation of the conference room can be detected using the detection result from a motion sensor, the detection result from an illuminance sensor, the detection result from a temperature sensor, various sensors such as a sensor for detecting opening/closing of the door, a surveillance camera, and the like.

Furthermore, as the situation change that is detected in the step of detecting a situation change, for example, a change in the use situation of the conference room (going in and out of a person, the temperature change, the illuminance change, and the like), a situation in which the smartphone or the tablet terminal is placed at the predetermined position, a change in the number of people in an automobile and the like are included.

Note that, for example, a change in the use situation of the conference room can be detected using the detection result from the motion sensor, the detection result from the illuminance sensor, the detection result from the temperature sensor, the various sensors such as the sensor for detecting open and close of the door, the surveillance camera, and the like.

Also, for, example, the fact that a portable terminal such as a smartphone is placed on the predetermined position can be detected using the detection result from an acceleration sensor and a GPS (Global Positioning System) mounted in the portable terminal, a radio wave sensor that can detect radio waves of the mobile phone, and the like.

In addition, for example, a change in the number of people in an automobile can be detected using the motion sensor, the weight sensor, image information of the image in which the inside of the automobile is captured, and the like.

The co-occurrence relation that is extracted in the above step of extracting a co-occurrence relation means, for example, if a number of situation changes occur for the certain action, the relation between the certain action and a situation changes relating to the certain action with an occurrence probability equal to or higher than the predetermined percentage. In other words, if there is the situation change that occurs with a probability equal to or higher than the predetermined percentage in conjunction with the certain action, it is determined that the co-occurrence relation exists between the action and the situation change.

For example, if a change in the use situation of a conference room is detected, the action of turning off the air conditioner, the action of turning off the lighting apparatus, the actions of switching off the projector and the like are conceivable as the action having the co-occurrence relation.

Also, for example, if it is detected that a portable terminal such as a smartphone is placed on the predetermined position, the actions of transferring a file to a backup server, switching off the portable terminal, lighting off the screen, turning off Wi-Fi, and the like are conceivable as an action having the co-occurrence relation.

Furthermore, for example, if a change in the number of people in an automobile is detected, the actions of changing the temperature setting of the air conditioner, opening or closing the widow of the rear seat, changing the audio equipment setting, and the like are conceivable as an action having a co-occurrence relation.

Accordingly, if a situation change satisfying the predetermined condition is detected, the action having the co-occurrence relation with the situation change can be extracted. That is, if the action having the co-occurrence relation has been detected, it is possible to detect that there is a possibility that the action that should occur in conjunction with the certain situation change has not been performed.

For example, if a change in the use situation of the conference room is detected, the action of turning off the air conditioner and the like are extracted as an action having a co-occurrence relation, and it is possible to notify the user of forgetting to turn off the air conditioner, the lighting apparatus, the projector and so on, or it is also possible to vicariously perform the action of turning off the device.

Also, for example, if it is detected that a portable terminal such as a smartphone is placed on the predetermined position, actions such as transferring a file to a backup server, switching off the portable terminal, lighting off the screen, turning off Wi-Fi are extracted as actions having a co-occurrence relation, and these actions can be automatically executed.

Furthermore, for example, if a change in the number of people in an automobile is detected, actions such as changing the temperature setting of the air conditioner and the like are extracted as actions having the co-occurrence relation, and these actions can be automatically executed.

As a result, for example, if a situation change having a co-occurrence relation with a certain action is detected, it is possible to perform inter-device coordination control in which various types of devices included in the sensor network are coordinated, so as to confirm, to the user, vicariously performing the action, or so as to automatically perform the action vicariously.

A recording medium according to a sixteenth invention stores the inter-device coordination program in the sensor network according to the fifteenth invention.

Here, the present invention is realized as the above recording medium that stores the inter-device coordination program in the sensor network.

In this manner, the above-mentioned effects can be obtained by a computer executing the inter-device coordination program in the sensor network that is stored in the recording medium.

Specifically, for example, if a situation change having a co-occurrence relation with a specific action is detected, it is possible to perform the inter-device coordination control in which various types of devices included in the sensor network are coordinated, so as to confirm, with the user, vicariously performing the action, or so as to automatically perform the action vicariously.

### EFFECTS OF THE INVENTION

With an inter-device coordination apparatus in a sensor network according to the present invention, even a general user who has no specialized knowledge can realize valued behavior by showing desirable behavior through an action.

### BRIEF DESCRIPTION OF THE DRAWINGS

Fig. 1 is a block diagram showing a configuration of an inter-device coordination apparatus in a sensor network according to an embodiment of the present invention.
Fig. 2 is a flowchart showing a flow of an inter-device coordination control method performed by the inter-device coordination apparatus shown in Fig. 1.
Fig. 3 is a plan view illustrating a case in which the inter-device coordination apparatus shown in Fig. 1 according to an embodiment of the present invention is applied to use of conference rooms.
Fig. 4 is a block diagram showing equipment such as various sensors, an air conditioner, and a lighting apparatus that are installed in the conference rooms shown in Fig. 3.
Fig. 5 is a block diagram showing a use schedule of the conference rooms shown in Fig. 3.
Fig. 6 is a diagram showing data, time information, and location information relating to equipment and system installed in the conference rooms shown in Fig. 3, which are saved in the database shown in Fig. 1.
Fig. 7 is a diagram showing data saved in the database shown in Fig. 1, which is acquired when an on/off state of the air conditioner installed in the conference rooms shown in Fig. 3 changes.
Fig. 8 is a diagram showing data saved in the database shown in Fig. 1, which is acquired when an on/off state of the motion sensor installed in the conference rooms shown in Fig. 3 changes.
Fig. 9 is a diagram showing data saved in the database shown in Fig. 1, which is acquired when a detection result (state) of the illuminance sensor installed in the conference rooms shown in Fig. 3 changes.
Fig. 10 is a flowchart showing a flow of an inter-device coordination control method performed by the inter-device coordination apparatus shown in Fig 1 in a case where the inter-device coordination apparatus is applied to the use of a conference room.
Fig. 11 is a diagram showing a display screen of a portable terminal of a user who receives a message for confirming whether an action (switching off the air conditioner) is performed in the inter-device coordination method that is performed in accordance with the flowchart shown in Fig. 10.
Fig. 12 is a block diagram showing various sensors mounted in the portable terminal in a case where the inter-device coordination apparatus shown in Fig. 1 according to another embodiment of the present invention is applied to the use of the portable terminal.
Fig. 13 is a block diagram showing system of the portable terminal in a case where the inter-device coordination apparatus shown in Fig. 1 according to the other embodiment of the present invention is applied to the use of the portable terminal.
Fig. 14 is a diagram showing data, time information, and location information relating to equipment and system installed in the portable terminal shown in Fig. 12, which are saved in the database shown in Fig. 1.
Fig. 15 is a diagram showing data saved in the database shown in Fig. 1, which is acquired when a detection result (location information) of the location detection sensor mounted in the portable terminal shown in Fig. 12 changes.
Fig. 16 is a diagram showing data saved in the database shown in Fig.1, which is acquired when the communication situation of the portable terminal shown in Fig. 12 changes.
Fig. 17 is a diagram showing data saved in the database shown in Fig. 1, which is acquired when a detection result (placing information) of the acceleration sensor provided in the portable terminal shown in Fig. 12 changes.
Fig. 18 is a flowchart showing a flow of an inter-device coordination control method performed by the inter-device coordination apparatus shown in Fig 1 in a case where the inter-device coordination apparatus is applied to the use of the portable terminal.
Fig. 19 is a diagram showing the display screen of the portable terminal of the user who receives a message for confirming whether to execute an action (transferring of a file) in the inter-device coordination method that is implemented in accordance with the flowchart shown in Fig. 18.

### EMBODIMENTS OF THE INVENTION

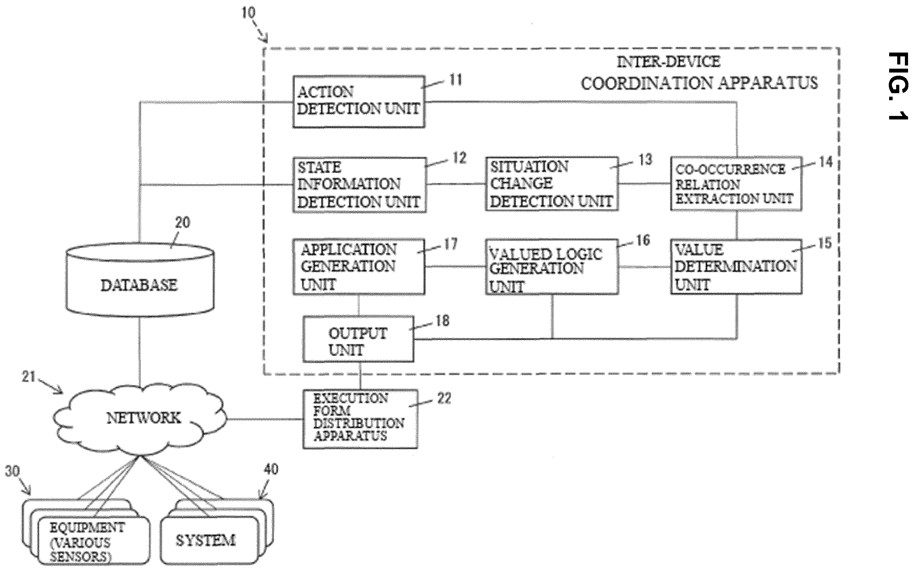

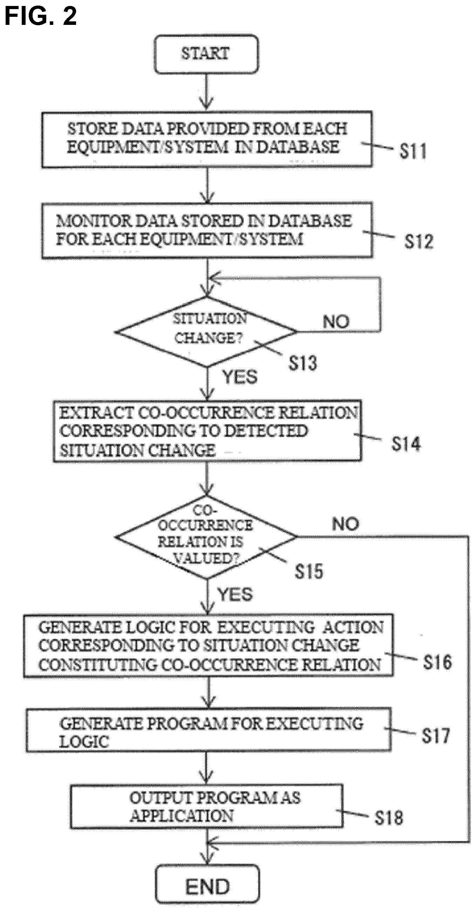

A basic configuration of an inter-device coordination apparatus 10 in a sensor network according to an embodiment of the present invention is illustrated as follows using Figs. 1 and 2.

### (1) Basic configuration

The inter-device coordination apparatus 10 in the sensor network according to this embodiment is an apparatus for realizing valued behavior by devices that support a sensor network/M2M/IoT coordinating with each other. As shown in Fig. 1, the inter-device coordination apparatus 10 is connected to a database 20 in which various types of data provided from equipment 30 and a system 40 via a network 21 are saved. Also, the inter-device coordination apparatus 10 is connected to an execution form distribution apparatus 22 that provides a program and the like to the outside via the network 21.

Here, a means for realizing the valued behavior by the inter-device coordination apparatus 10 according to this embodiment includes, for example, a means in which the inter-device coordination apparatus 10 directly controls various types of apparatuses so as to realize the valued behavior. Also, as another means, for example, a means is also included in which the inter-device coordination apparatus 10 automatically generates a program for realizing the valued behavior, and provides the program onto the network 21 as an application via the execution form distribution apparatus 22.

When the inter-device coordination apparatus 10 detects behavior performed by a user, the inter-device coordination apparatus 10 relates information from various sensors acquired from a database 20 with the behavior by the user, and then if the information from the various sensors satisfies a predetermined condition, the inter-device coordination apparatus 10 vicariously performs the behavior.

More specifically, the inter-device coordination apparatus 10 detects a situation change with respect to various data acquired from the various sensors installed in the equipment or the like. Then, the inter-device coordination apparatus 10 detects the action (behavior performed by the user) corresponding to this situation change as the co-occurrence relation, and determines the presence or absence of value of the co-occurrence relation. Furthermore, with respect to the action constituting the co-occurrence relation determined to be valued, the inter-device coordination apparatus 10 performs control for automatically performing the action, or generates a program for vicariously performing the action and provides the program externally.

Here, the above co-occurrence relation is constituted by, for example, the situation change that is detected by the various sensors and the action of the user, and means that a probability of the action that occurs in correspondence with the detected situation change is, for example, 80% or higher.

In the inter-device coordination apparatus 10 according to this embodiment, for example, the fact that some action of the user and a situation change that is detected by the change in various data are in a co-occurrence relation is extracted in advance. Then, if the detection result from the various sensors or the like applies to any co-occurrence relation, the inter-device coordination apparatus 10 automatically performs the action of the use vicariously, or generates a program for vicariously performing the action and provides the program as an application.

The database 20 saves various data provided from the equipment 30 and the system 40. The detection results from the various sensors provided in the equipment 30, schedule information included in the system 40, and various applications and the like are included as the various data saved in the database 20.

Also, if a situation change is detected, the action having the co-occurrence relation with the situation change is saved in the database 20, and if an action is detected, the situation change having the co-occurrence relation with the action is saved in the database 20.

That is, relations between situation changes and actions that constitute a co-occurrence relation are saved in the database 20. Then, if a situation change is detected, the co-occurrence relation with the corresponding action is determined. On the other hand, if an action is detected, the co-occurrence relation with the corresponding situation change is determined.

Therefore, if either an action or a situation change is detected, processing to be described later may be performed.

Furthermore, the combinations of the actions and the situation changes that constitute the above co-occurrence relations are saved in the database 20. Each of the actions is associated with detection results of the various sensors. Also, similarly, each of the situation changes is associated with detection results of the various sensors.

For example, the equipment 30 is an apparatus, a facility or the like installed with various sensors and whose situation change can be detected, and, in a specific example to be described later, the equipment 30 is described using a conference room and a mobile terminal.

The system 40 is a system that is provided for each of the above equipment 30, and include, for example, schedule management, various Web sites, applications and the like.

As shown in Fig. 1, the inter-device coordination apparatus 10 includes an action detection unit 11, a state information detection unit 12, a situation change detection unit 13, a co-occurrence relation extraction unit 14, a value determination unit 15, a valued logic generation unit 16, an application generation unit 17, and an output unit 18.

The action detection unit 11 extracts an action performed by a person, based on the data stored in the database 20.

The state information detection unit 12 extracts a state of an environment including the person, based on the data stored in the database 20. Note that when the state of the environment including the person is detected, not only the value of the data itself but also data acquired by processing the data may be used.

Regarding the state of the environment including the person that is detected by the state information detection unit 12, the situation change detection unit 13 focuses on the change in time series, and detects the point of change of the state as the situation change.

The co-occurrence relation extraction unit 14 extracts the situation change that co-occurs in terms of time and space with respect to the action detected by the action detection unit 11, and extracts the action and a set of one or more situation changes as co-occurrence relations.

The value determination unit 15 determines the presence or absence of value with respect to co-occurrence relations that are extracted by the co-occurrence relation extraction unit 14. Then, the value determination unit 15 detects co-occurrence relations that are determined to be valued as valued relations.

Note that, regarding the determination of the presence or absence of value, the presence or absence of value is not only determined based on predetermined criteria, but the user may be required to make a judgment through the user interface and a final value determination may be made based on a result of the response from the user.

The valued logic generation unit 16, defines a set of situation changes as a precondition with reference to the valued relations, and generates a logic for automatically performing an operation or the like corresponding to the action constituting the co-occurrence relation together with these situation changes, when the precondition is satisfied.

The application generation unit 17 generates an inter-device coordination program based on the logic generated by the valued logic generation unit 16, and outputs the program as an application.

The output unit 18 outputs, to the execution form distribution apparatus 22, the inter-device coordination program generated by the application generation unit 17 as the application. Furthermore, the output unit 18 outputs, via the execution form distribution apparatus 22, a message for asking the user whether the determination result from the value determination unit 15 and the logic generated by the valued logic generation unit 16 are valued.

The execution form distribution apparatus 22 provides the execution form (application, etc.) generated by the output unit 18 to the equipment 30 and the system 40 via the network 21. Note that the execution form may be provided not only to the equipment and the system relating to the series of the processing, but also to equipment and a system managed by a third party. Also, when the execution form such as the application is provided, a mechanism in which compensation is provided from the third party or the like that receives the execution form may be constructed.

In recent environments in which a wide variety of devices such as sensors and actuators are arranged, specialized knowledge, awareness for finding the valued coordination, and formalization are required, in order to realize valued coordination between the devices.

On the other hand, there is a case where even the user who has no specialized knowledge performs valued actions, based on his or her common sense and habitual practices.

For example, a valued action is an action such as switching off the lighting apparatus, the air conditioner, or the projector in the conference room, which are performed by the user, after all people have left the conference room.

The inter-device coordination apparatus 10 according to this embodiment detects the situation change relating to the use of the conference room, by using various accessible data such as data from the sensor that detects opening/closing of the door of the conference room, data from a temperature and humidity sensor, online schedule information or the like. Then, the inter-device coordination apparatus 10 extracts the detection results from the various sensors and information relating to the actions performed by the user after the end of the use of the conference room.

Furthermore, the inter-device coordination apparatus 10 sets the content of the extracted situation change to the precondition, defines the behavior reproducing the action by the user performed when the precondition is satisfied as the valued hypothesis of the coordination, programs the valued hypothesis, and generates a program, for example.

For example, as actions regarding the use of the conference room, if a state in which the door of the conference room is opened or closed, the temperature and the humidity decrease, and no people remain is confirmed, it is determined that the above precondition is satisfied, and the control for automatically realizing actions such as switching off the lighting apparatus and the air conditioner of the conference room that the user forgot to switch off is performed.

The validity of the generated inter-device coordination program may be verified with the user, when the above precondition is satisfied, by proposing to vicariously perform the actions, or by proposing the combination of the precondition and the actions to the user.

Also, the generated inter-device coordination program may be provided as an application to a third party through an online market. In this manner, the valued action that should be performed by the user is provided as an application without specialized knowledge, and also compensation can be obtained.

### Flow of inter-device coordination method in basic configuration

The inter-device coordination apparatus 10 of this embodiment includes the above configuration, and implements the inter-device coordination method in accordance with the flowchart shown in Fig. 2.

That is, in step S11, data provided from each equipment 30 and system 40 is stored in the database 20.

Then, in step S12, the state information detection unit 12 detects the data provided by each equipment 30 and system 40 and stored in the database 20, and the situation change detection unit 13 monitors whether there is a situation change in each equipment 30 and system 40.

In step S13, the situation change detection unit 13 performs the determination until a situation change occurs. Here, if the situation change detection unit 13 determines that a situation change has occurred, the processing moves to step S14.

Then, in step S14, the co-occurrence relation extraction unit 14 extracts the co-occurrence relation corresponding to the situation change detected by the situation change detection unit 13,.

In step S15, the value determination unit 15 determines whether the co-occurrence relation extracted by the co-occurrence relation extraction unit 14 has value.

Here, if the value determination unit 15 determines that the co-occurrence relation has value, the processing moves to step S16. On the other hand, if the value determination unit 15 determines that the co-occurrence relation does not have value, the processing ends.

Then, in step S16, with regard to the co-occurrence relation that is determined to be valued by the value determination unit 15 in step S15, the valued logic generation unit 16 generates a logic for performing the action constituting the co-occurrence relation together with the situation change detected by the situation change detection unit 13.

Next, in step S17, the application generation unit 17 generates a program for causing a computer to execute the logic generated in step S16.

In step S18, the output unit 18 outputs, to the execution form distribution apparatus 22, the program generated in step S17 as an application.

In the inter-device coordination apparatus 10 of this embodiment, by performing the inter-device coordination control as mentioned above, even a user who has no specialized knowledge can implement the control for vicariously performing the valued action, by detecting a situation change constituting a co-occurrence relation together with a specific action. Alternatively, it is possible to generate a program for vicariously performing the valued action and provided the program externally.

### Embodiment 1

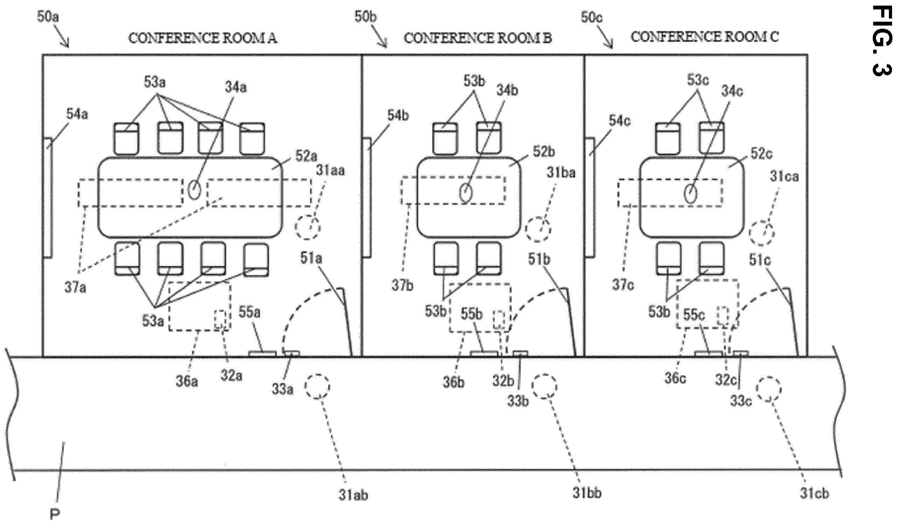

Here, the inter-device coordination apparatus 10 including the above basic constitution is described using Figs 3 to 11, for a working example in which the inter-device coordination apparatus 10 is applied to use of the conference rooms shown in Fig. 3.

As shown in Fig. 3, three conference rooms: a conference room A 50a, a conference room B 50b and a conference room C 50c are respectively installed with doors 51a to 51c, tables 52a to 52c, multiple chairs 53a to 53c, whiteboards 54a to 54c, and switch panels 55a to 55c.

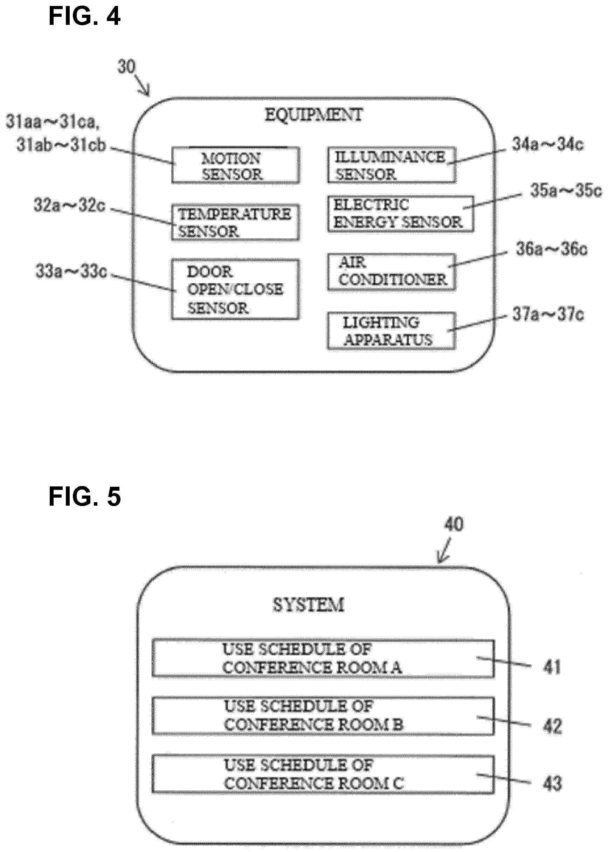

Also, as shown in Fig. 3, the conference room A 50a, the conference room B 50b, and the conference room C 50c are respectively installed with motion sensors (provided inside of the rooms) 31aa to 31ca, motion sensors (provided in a passageway) 31ab to 31cb, temperature sensors 32a to 32c, door open/close sensors 33a to 33c, illuminance sensors 34a to 34c, electric energy sensors 35a to 35c (see Fig. 4), air conditioners 36a to 36c, and lighting apparatuses 37a to 37c.

As shown in Fig. 3, the motion sensors (provided inside of the rooms) 31aa to 31ca are installed in the ceiling portion in the conference rooms A 50a to C 50c, and detects a person in the conference rooms A 50a to C 50c.

In this manner, it can be inferred whether each of the conference rooms A 50a to C 50c is being used, by using the detection results from the motion sensors 31aa to 31ca.

As shown in Fig. 3, the motion sensors (provided in the passageway) 31ab to 31cb are installed in a ceiling portion on a passage way P side of the outside of the doors 51a to 51c of the conference rooms A 50a to C 50c. Then, the motion sensors 31ab to 31cb detects a person entering the conference rooms A 50a to C 50c and a person leaving the conference rooms A 50a to C 50c.

In this manner, the start or the end of the use of the conference rooms A 50a to C 50c can be inferred, by using the detection results from the motion sensors 31ab to 31cb.

As shown Fig. 3, the temperature sensors 32a to 32c are provided in the air conditioners 36a to 36c that are installed in the ceiling portion in the conference rooms A 50a to C 50c, and detect the room temperatures in the conference rooms A 50a to C 50c.

In this manner, the start or the end of a conference in the conference rooms A 50a to C 50c is inferred, by using the detection results from the temperature sensors 32a to 32c.

As shown in Fig. 3, the door open/close sensors 33a to 33c are installed in the vicinity of the doors 51a to 51c of the conference rooms A 50a to C 50c, and detect the opening/closing of the doors 51a to 51c.

In this manner, entering and leaving of a person to and from the conference rooms A 50a to C 50c, that is, the start or the end of a conference in the conference rooms A 50a to C 50c can be inferred, by using the detection results from the door open/close sensors 33a to 33c.

As shown Fig. 3, the illuminance sensors 34a to 34c are provided on the tables 52a to 52c in the conference rooms A 50a to C 50c. The illuminance sensors 34a to 34c detect the brightness in each of the conference rooms 50a to 50c.

In this manner, the use situation of the conference rooms A 50a to C 50c can be inferred, by using the detection results from the illuminance sensors 34a to 34c.

The electric energy sensors 35a to 35c detects the power consumption in each of the conference rooms 50a to 50c. Specifically, the electric energy sensors 35a to 35c detect the power consumption associated with the use of the air conditioners 36a to 36c, the lighting apparatuses 37a to 37c, the projectors (not shown) and the like, which are respectively installed in the conference rooms 50a to 50c.

In this manner, the use situation of the conference rooms A 50a to C 50c can be inferred, by using the detection results from the electric energy sensors 35a to 35c.

As shown in Fig. 3, the air conditioners 36a to 36c are installed in the ceiling portion in the conference rooms A 50a to C 50c, and adjusts the temperatures in the conference rooms A 50a to C 50c. Then, the air conditioners 36a to 36c are switched on or off, by operating switches included in the switch panels 55a to 55c provided in the vicinity of the entrances of the conference rooms A 50a to C 50c.

As shown in Fig. 3, the lighting apparatuses 37a to 37c are installed in the ceiling portion in the conference rooms A 50a to C 50c, and illuminate the inside of the conference rooms A 50a to C 50c. Then, similar to the air conditioners 36a to 36c, the lighting apparatuses 37a to 37c are switched on or off, by operating switches included in the switch panels 55a to 55c provided in the vicinity of the entrances of the conference rooms A 50a to C 50c.

Here, in this embodiment, a case where the inter-device coordination control is performed at the time when the conference room A 50a is used, out of the three conference rooms A 50a, B 50b, and C 50c shown in Fig. 3, is described.

As shown in Fig. 4, the motion sensors 31aa to 31ca and 31ab to 31cb, the temperature sensors 32a to 32c, the door open/close sensors 33a to 33c, the illuminance sensors 34a to 34c, and the electric energy sensors 35a to 35c are respectively installed in the conference rooms A 50a to C 50c as various sensors.

Then, as the system 40 relating to the use of the conference rooms A 50a to C 50c, as shown in Fig. 5, management performed by using use schedules 41 to 43 of the conference rooms A to C for managing the use schedule of each conference room is provided.

The use schedules 41 to 43 of the conference rooms A to C save data recording a reservation status of each conference room, use time schedule and the like.

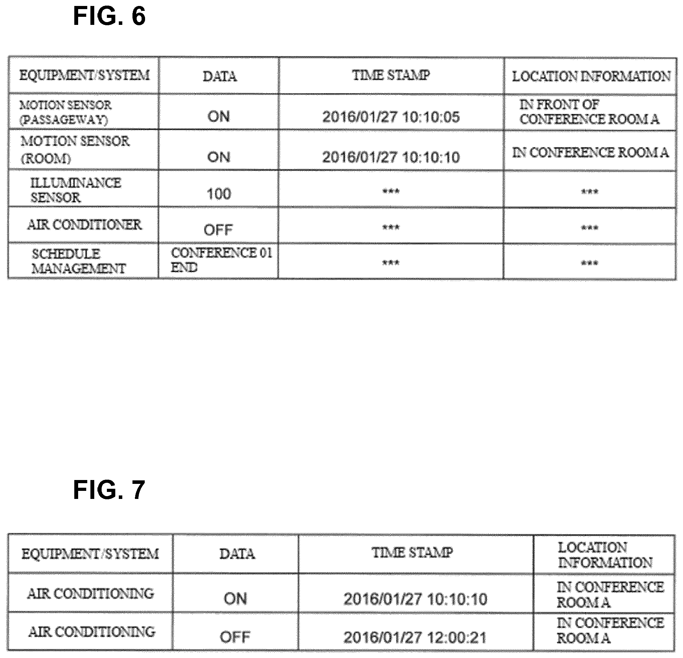

Also, when the conference room A 50a shown in Fig. 3 is used, as shown in Fig. 6, various data is provided to and saved in the database 20.

Specifically, in the database 20, as shown in Fig.6, each of the detection results from the motion sensors 31aa and 31ab and the illuminance sensor 34a that are installed in the conference room A 50a, and time information (time stamp) and location information as metadata associated with the detection results are provided and saved. Also, in the database 20, data (an off state) of the air conditioner 36a installed in the conference room A 50a is provided and saved. Furthermore, as the system relating to the use of the conference room A 50a, data of the schedule management (end of a conference 01) is provided and saved.

Note that, various data shown in Fig. 6 are monitored by each of the various sensors and system installed in the conference rooms A 50a to C 50c in the state information detection unit 12 of the inter-device coordination apparatus 10. Then, the situation change detection unit 13 detects a change in the data in time series, which is stored in the database 20, as the situation change.

In this embodiment, as the action that is detected by the action detection unit 11, as shown in Fig. 7, the action of switching off the air conditioner 36a installed in the conference room A 50a is detected.

That is, it is inferred that the user who has finished using the conference room A 50a, normally, switches off the air conditioner 36a and the lighting apparatus 37a of the conference room A 50a, and leaves the conference room A 50a. Therefore, in the inter-device coordination apparatus 10 of this embodiment, a case where the user has left the conference room A 50a while forgetting to switch off the air conditioner 36a is assumed, and the action of switching off the air conditioner 36a is detected as a candidate of the valued action.

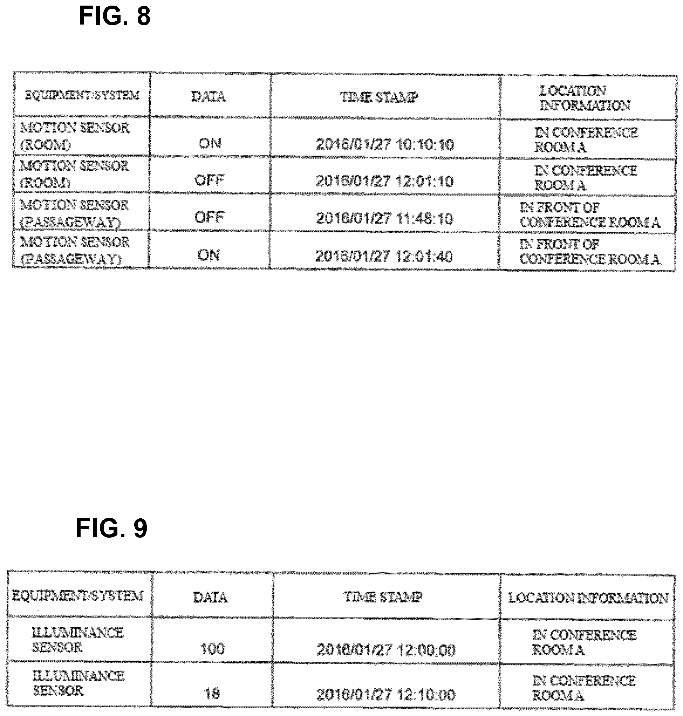

Here, the end of the use of the conference room A 50a can be inferred, for example, as shown in Fig. 8, by detecting that the motion sensor 31aa installed in the room has changed from on to off, and by detecting that, almost at the same time of this, the motion sensor 31ab on the passageway P side has changed from off to on.

That is, it is detected that the on state of the motion sensor 31aa in the room at 10:10:10 on 2016/01/27 changed to the off state at 12:01:10 on 2016/01/27. Then, it is detected that the off state of the motion sensor 31ab on the passageway P side at 11:48:10 on 2016/01/27 changed to the off state at 12:01:40 on 2016/01/27.

Note that as another method for detecting the end of the use of the conference room A 50a, for example, as shown in Fig. 9, a change in the brightness in the conference room A 50a that is detected by the illuminance sensor 34a in the conference room A 50a may be detected.

However, the brightness in the conference room A 50a will change not only due to on/off of the lighting apparatus 37a, but also by, for example, opening/closing of a curtain, use/non-use of a projector and the like. Therefore, as the means for inferring the end of the use of the conference room A 50a, it is preferable that this detection result is used in combination with the detection result from the above motion sensors 31aa and 31ab or the like.

In addition, data of the schedule management shown in Fig. 6 may be one element for detecting the end of the use of the conference room A 50a.

In the inter-device coordination apparatus 10 of this embodiment, as mentioned above, the situation change detection unit 13 detects a change in the use situation of the conference room A 50a, based on a change in the data provided from the database 20.

Then, the co-occurrence relation extraction unit 14 extracts the combination including the change in the use situation of the conference room A 50a that is detected by the situation change detection unit 13 and the action corresponding to this change as the co-occurrence relation.

As the combinations of situation changes and actions detected by the co-occurrence relation extraction unit 14, the following actions are conceivable, for example.

After the action of switching off the air conditioner 36a (shutting off power to the air conditioner 36a) in the conference room A 50a, the motion sensor 31ab on the passageway P side in front of the conference room A 50a switches on.

After the action of switching off the air conditioner 36a (turning off the air conditioner 36a) in the conference room A 50a, the illuminance (brightness) in the conference room A 50a decreases.

After the power consumption in the conference room A 50a decreases (switching off of a PC and the projector), the air conditioner 36a in the conference room 50a is switched off (the air conditioner 36a is turned off).

In this embodiment, the occurrence order of the situation change and the action does not matter, the co-occurrence relation therebetween is focused on.

Then, the value determination unit 15 determines, for an action that has an occurrence probability of a predetermined percentage or higher (e.g., 80%) with respect to a situation change, the combination of that action and situation change as a valued co-occurrence relation.

The combination of the situation change and the action corresponding to this co-occurrence relation includes an action such as switching off the air conditioner 36a (turning off air conditioning) in the conference room A 50a after the end of the use of the conference room A 50a.

On the other hand, a co-occurrence relation with a situation change that almost certainly occurs (for example, the occurrence probability is 99% or higher) after a certain action is performed is inferred as not being valued (a change caused as the result of the action). An example corresponding thereto is a case where the temperature in the conference room A 50a decreases after the action of switching off the air conditioner 36a (turning off air conditioning) in the conference room A 50a.

Note that the relation between the action that the inter-device coordination apparatus 10 can vicariously perform and the situation change may be one to one, or the co-occurrence relation may be constituted by the combination of one action and multiple situation changes. Alternatively, multiple operations are set as one action, and the co-occurrence relation may be constituted by the combination of the one action and one or multiple situation changes.

The valued logic generation unit 16 generates a logic for automatically performing the action vicariously that conforms to the situation change and is determined to be valued by the value determination unit 15. For example, for the example of the use of the conference room A 50a, the valued logic generation unit 16 generates a logic for automatically switching off the air conditioner 36a, if the end of the use of the conference room A 50a is detected.

The application generation unit 17 generates a program for vicariously performing the action of switching off the air conditioner 36a based on the logic generated by the valued logic generation unit 16.

The output unit 18 outputs, to the outside, the program generated by the application generation unit 17 as an application.

As mentioned above, the inter-device coordination apparatus 10 of this embodiment detects the end of the use of the conference room A 50a as the situation change, and extracts the co-occurrence relation including this situation change and the related specific action.

In this manner, for example, the action of switching off the air conditioner 36a can be automatically performed vicariously, as the valued action that the user performs when the use of the conference room A 50a ends. Accordingly, the user of the conference room A 50a can have the action of automatically switching off the air conditioner 36a performed on his or her behalf, even when having forgotten to switch off the air conditioner 36a.

Also, in the inter-device coordination apparatus 10 of this embodiment, the value determination unit 15 determines, for the extracted co-occurrence relation, whether the extracted co-occurrence relation is valued.

In this manner, after the situation change is detected, performing meaningless control is avoided, and only valued actions are vicariously performed.

Furthermore, the inter-device coordination apparatus 10 of this embodiment generates a program for automatically performing the action constituting the co-occurrence relation determined to be valued, and provides the program externally.

As a result, for example, the program can be provided to an external apparatus (e.g., a portable terminal or the like) via the network 21 as an application.

Flow of inter-device coordination method when the conference room is used

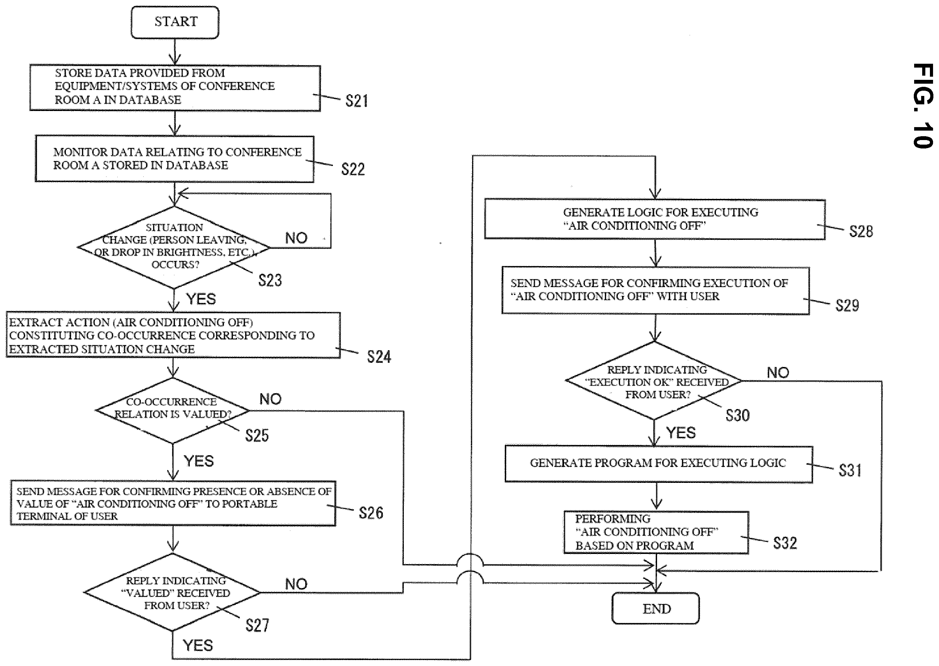

The inter-device coordination apparatus 10 of this embodiment performs the inter-device coordination method in accordance with the flowchart shown in Fig. 10 at the time of the aforementioned use of the conference room.

That is, in step S21, various data provided from the equipment 30 and the system 40 of the conference room A 50a is provided to and stored in the database 20 (see Fig. 6).

Next, in step S22, the state information detection unit 12 acquires the data relating to the conference room A 50a stored in the database 20, and the situation change detection unit 13 monitors the occurrence of the situation change that is based on a change in the data. Note that the situation change that is detected in this embodiment is the start or end of the use of the conference room A 50a.

Then, in step S23, if the situation change detection unit 13 detects the change in the use situation of the conference room A 50a, that is, detects the end of the use, the processing moves to step S24. Note that, in this embodiment, the change in the use situation of the conference room A 50a is detected using the detection result from the motion sensors 31aa and 31ab, the illuminance sensor 34a, and the schedule management.

In step S24, the co-occurrence relation extraction unit 14 extracts, as the co-occurrence relation, the detected situation change (the end of the use of the conference room A 50a) and the action corresponding to this situation change (switching off of the air conditioner 36a).

In step S25, for the extracted co-occurrence relation, the value determination unit 15 determines whether the co-occurrence relation has value. Here, if the co-occurrence relation has value, the processing moves to step S26. On the other hand, if it is determined that the co-occurrence relation has no value, the processing ends, because it is not valued to vicariously perform the action.

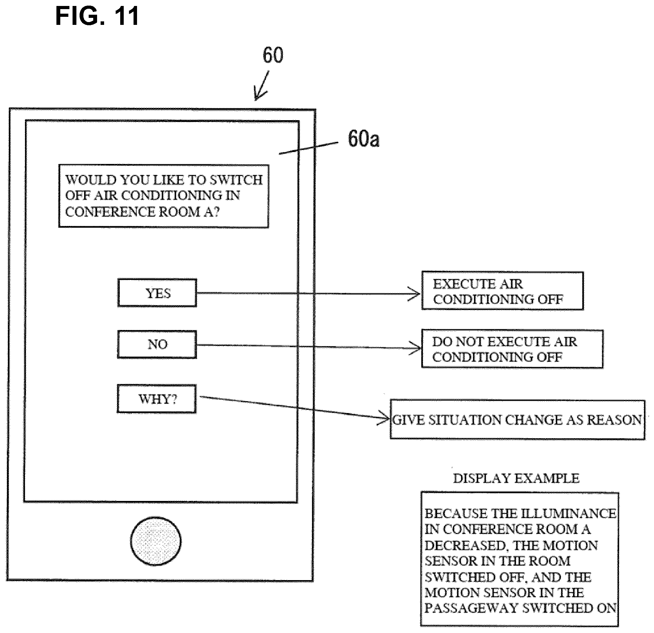

Next, in step S26, a message for confirming whether the action constituting the co-occurrence relation (switching off of the air conditioner 36a) is valued is sent to a portable terminal 60 (see Fig. 11) such as a smartphone or a tablet terminal that the user of the conference room A 50a owns.

In step S27, if a reply indicating that the action is valued is received from the portable terminal 60 that the user owns, the processing moves to step S28. On the other hand, if a reply indicating that the action is not valued is received, or no reply is received, the processing ends.

In step S28, for the action that is confirmed to be valued by the user (switching off of the air conditioner 36a), the valued logic generation unit 16 generates a logic for automatically performing the action.

In step S29, again, for the action that was confirmed to be valued by the user (switching off of the air conditioner 36a), a message for confirming to perform the action is sent to the portable terminal 60 of the user.

At this time, in a display screen 60a of the portable terminal 60 of the user, as shown in Fig. 11, a message of "Would you like to switch off the air conditioning of conference room A?" is displayed, and three choices of "Yes", "No", and "Why?" are displayed under the message.

If the user choices "Yes", the processing proceed such that the processing of switching off the air conditioner 36a is performed. On the other hand, if the user choices "No", the user wishes to keep the air conditioner 36a on, and thus the processing ends without performing the action of turning off the air conditioning.

If the user choices "Why?", the user wants to know the reason why this inquiry was issued, for the action (turning off of air conditioning). Accordingly, a screen for describing the situation change as the reason for the inquiry is displayed.

Specifically, as shown in Fig. 11, the reason is displayed on the display screen 60a as "Because the illuminance in conference room A decreased, the motion sensor in the room switched off, and motion sensor in passageway switched on", which indicates that the inter-device coordination apparatus 10 issued the inquiry after determining that the conference had ended.

In step S30, if a reply indicating that performing the action of turning off air conditioning (the choice shown in Fig. 11 is "Yes") is acceptable is received from the user, the processing moves to step S31. On the other hand, if the user choices "No", or no reply is received, the processing ends.

Then, in step S31, the application generation unit 17 generates a program based on the logic for performing the action of turning off the air conditioning.

In step S32, the inter-device coordination apparatus 10 itself automatically performs the action of switching off the air conditioner 36a vicariously, based on the generated program.

Note that a program for causing another device to perform the action of switching off the air conditioner 36a may be provided to the outside via the network 21 or the like. At this time, compensation for providing the program may be set.

### Embodiment 2

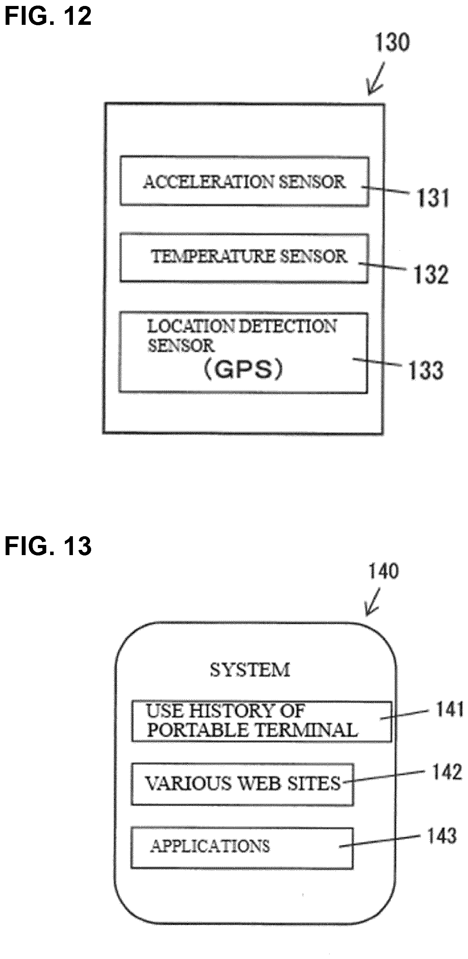

In this embodiment, as another working example that is different from the example in which, as mentioned above, the inter-device coordination apparatus 10 is applied when the conference room is used, a case where the inter-device coordination apparatus 10 is applied to the use of a portable terminal 130 is described as follows by using Figs. 12 to 19.

In the portable terminal 130, as various sensors for detecting the change in the use situation of the portable terminal 130, as shown in Fig. 12, an acceleration sensor 131, a temperature sensor 132, and a location detection sensor (GPS) 133 and the like are mounted.

The acceleration sensor 131 detects the use situation (use state, placement state, etc.) of the portable terminal 130, by detecting acceleration generated in the portable terminal 130.

The temperature sensor 132 detects the use state, a charging state, the placement state and the like, by measuring the temperature of the portable terminal 130.

The location detection sensor 133 detects location information such as a user's house and office, or a state of being out of the office or house, by detecting the location of the portable terminal 130.

Then, a system relating to the use of the portable terminal 130 includes, as shown in Fig. 13, a use history 141 of the portable terminal 130, various Web sites 142, and an application 143.

The use history 141 of the portable terminal 130 includes, for example, the history of switching on/off of the portable terminal 130, the history of turning on/off of Wi-Fi, and the history of lighting off of the screen and the like.

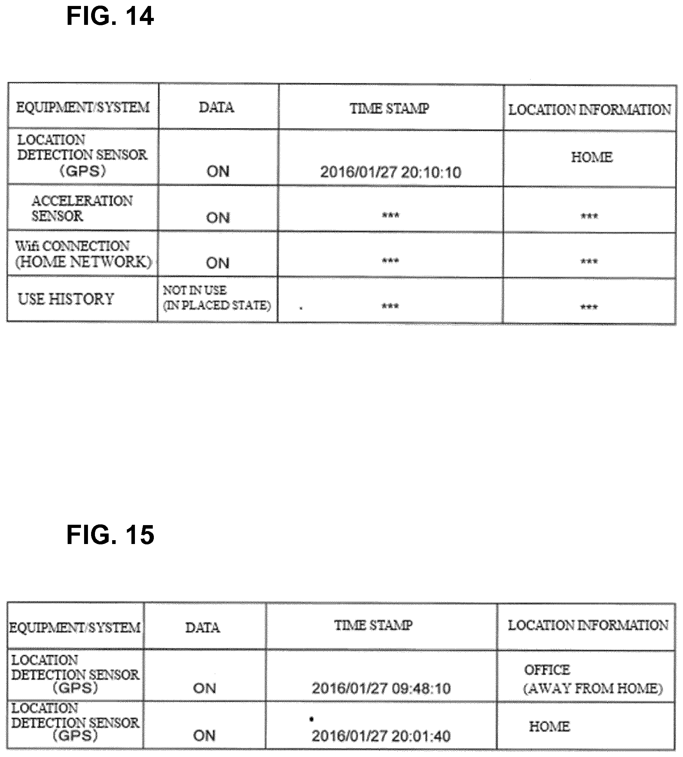

When the portable terminal 130 is used, as shown in Fig. 14, various data is provided to and saved in the database 20.

Specifically, in the database 20, as shown in Fig.14, each of the detection results from the acceleration sensor 131 and the location detection sensor 133 that are mounted in the portable terminal 130, and the time information (time stamp) and the location information as the metadata associated with the detection results are provided and saved. Also, in the database 20, the Wi-Fi connection state of the portable terminal 130 acquired by confirming the communication state, the use history acquired from the use history 141 of the portable terminal 130 and the like are provided and saved.

Note that the various data shown in Fig. 14 are monitored by each of the various sensors and system mounted in the portable terminal 130 in the state information detection unit 12 of the inter-device coordination apparatus 10. Then, the situation change detection unit 13 detects a change in the data in time series, which is stored in the database 20, as the situation change.

In this embodiment, as the action detected by the action detection unit 11, the action of transferring a file to a backup server (not shown) and the like from the portable terminal 130 when the owner of the portable terminal 130 is asleep and the like is detected.

That is, it is inferred that the user who finished using the portable terminal 130 that day normally transfers, for saving important data, a file to the backup server or the like regularly to save backup data. Accordingly, the inter-device coordination apparatus 10 of this embodiment assumes a case where the user falls asleep after forgetting to transfer the file, and detects the action of transferring the file to the backup server from the portable terminal 130 as a candidate of the valued action.

Here, the fact that the end of use of the portable terminal 130 that day can be inferred, for example, as shown in Fig. 15, by using the location detection result from the location detection sensor 133 that is mounted in the portable terminal 130.

That is, the fact that the user of the portable terminal 130 returns home from being at the office or the like can be detected by using information such as the detection result from the location detection sensor 133, the time information, and the use history.

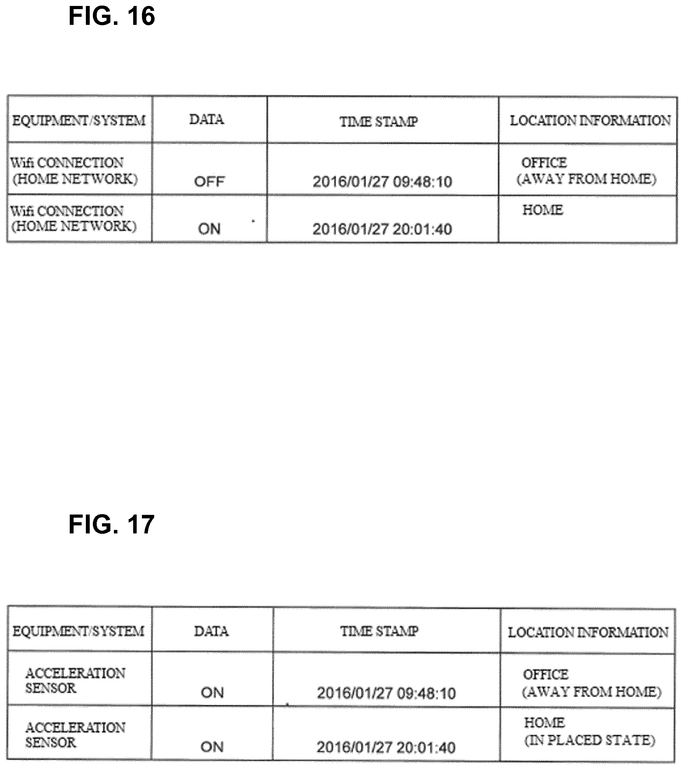

That is, as shown in Fig. 15, the situation change detection unit 13 detects the fact that the location detection sensor 133 exists away from his or her house (at the office. etc.) at 09:48:10 on 2016/01/27, and then detects the fact (the change) that the location detection sensor 133 exists at the location in his or her house at 20:01:40 on 2016/01/27/. Then, as shown in Fig. 16, the situation change detection unit 13 detects, as the communication status of the portable terminal 130, that the off state of the portable terminal 130 that is not connected to the home network (Wi-Fi) at 09:48:10 on 2016/01/27 has changed to the on state at 20:01:40 on 2016/01/27.

The situation change detection unit 13 can detect the fact that the user of the portable terminal 130 has returned to his or her house, by detecting the above situation change.

Furthermore, it can be inferred that the fact that the user is asleep corresponds to the fact that the portable terminal 130 is placed at a predetermined location, by using the detection results from the location detection sensor 133 and the acceleration sensor 131, the use history, the time information and the like.

That is, as shown in Fig. 17, the situation change detection unit 13 detects that the state of the portable terminal has changed from the operating state away from his or her house (at the office, etc.) at 09:48:10 on 2016/01/27 to a state in which the portable terminal is placed in his or her house at 20:01:40 on 2016/01/27, from the detection results from the location detection sensor 133 and the acceleration sensor 131.

Then, the co-occurrence relation extraction unit 14 extracts the combination including the change in the use situation of the portable terminal 130 that is detected by the situation change detection unit 13 and the action corresponding to this change as the co-occurrence relation.

After the situation change, the value determination unit 15 determines, for the action that has the occurrence probability with a predetermined percentage or higher (for example, 80%), the combination of the action and the situation change as the valued co-occurrence relation.

The combination of the situation change and the action corresponding this includes the situation change that the user is asleep after finishing the use of the portable terminal 130 that day and the action of transferring the file of the portable terminal 130 to the backup server.

Note that, other than the action of transferring the file, actions such as disconnecting Wi-Fi, turning off the display screen, powering off the device, sending a specific mail are conceivable as the action corresponding to the above situation change.

The valued logic generation unit 16 corresponds to the situation change, and generates a logic for automatically performing the action determined to be valued by the value determination unit 15 vicariously. In the case of example of the use of the portable terminal 130, the valued logic generation unit 16 generates a logic for automatically transferring the file, when the end of use of the portable terminal 130 that day is detected.

The application generation unit 17 generates a program for vicariously performing the action of automatically transferring the file to the backup server from the portable terminal 130, based on the logic generated by the valued logic generation unit 16.

The output unit 18 outputs, to the outside, the program generated by the application generation unit 17 as the application.

As mentioned above, the inter-device coordination apparatus 10 of this embodiment detects the end of the use of the portable terminal 130 that day as the situation change, and extracts the co-occurrence relation including this situation change and the related specific action.

In this manner, for example, the action of transferring the file to the backup server can be automatically performed vicariously, as the valued action that the user performs when the use of the portable terminal 130 ends. Accordingly, the user can have the action of automatically transferring the file performed on his or her behalf even when having forgotten to transfer the file when he or she goes to bed.

Also, in the inter-device coordination apparatus 10 of this embodiment, the value determination unit 15 determines, for the extracted co-occurrence relation, whether the extracted co-occurrence relation has value.

In this manner, after the situation change is detected, performing meaningless control is avoided, and only valued action are vicariously performed.

Furthermore, for the action constituting the co-occurrence relation determined to be valued, the inter-device coordination apparatus 10 of this embodiment generates a program for automatically performing the action, and provides the program to the outside.

As a result, for example, the program can be provided to an external apparatus (for example, a portable terminal or the like) via the network 21 as the application.

Flow of the inter-device coordination method when the portable terminal is used

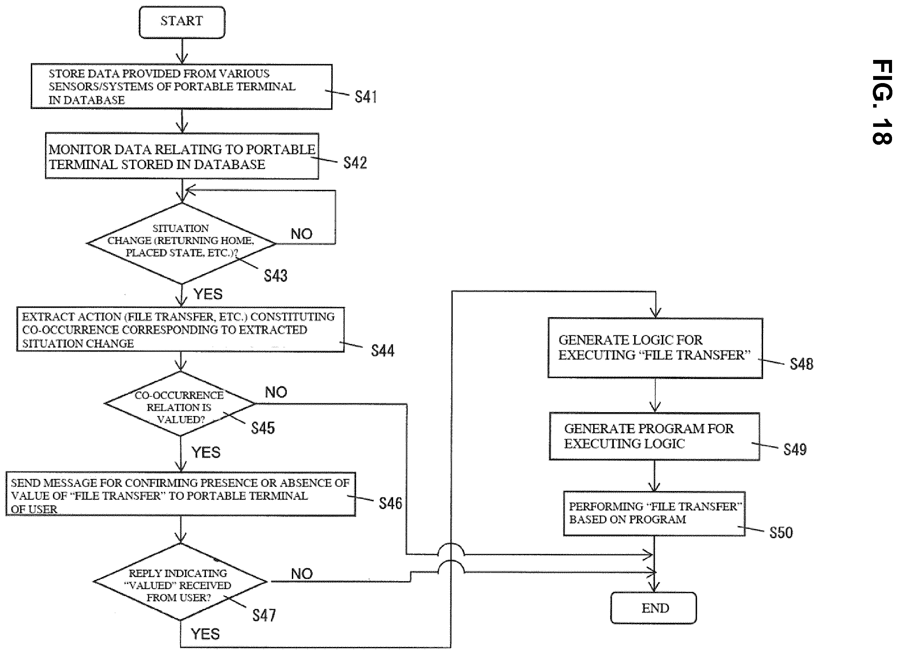

The inter-device coordination apparatus 10 of this embodiment performs the inter-device coordination method in accordance with the flowchart shown in Fig. 18 at the time of the aforementioned use of the portable terminal 130.

That is, in step S41, various data relating to the portable terminal 130 provided from the equipment 30 (sensors)/system 40 are provided to and stored in the database 20 (see Fig. 14).

Next, in step S42, the state information detection unit 12 acquires the data relating to the portable terminal 130 stored in the database 20, and the situation change detection unit 13 monitors the occurrence of the situation change occurred based on the change in the data. Note that the situation change that is detected in this embodiment is the end of the use of the portable terminal 130 that day.

Next, in step S43, if the situation change detection unit 13 detects that the use situation of the portable terminal 130 is changed, that is, detects that the state is shifted to the state in which the portable terminal 130 is placed after the user has returned to his or her house, the processing moves to step S44. Note that, in this embodiment, the change in the use situation of the portable terminal 130 can be detected by using, for example, the detection results from the acceleration sensor 131 and the location detection sensor 133, and the use history 141.

In step S44, the co-occurrence relation extraction unit 14 extracts, as the co-occurrence relation, the detected situation change (the end of use of the portable terminal 130 that day) and the action corresponding to this situation change (transferring of the file).

In step S45, for the extracted co-occurrence relation, the value determination unit 15 determines whether the co-occurrence relation has value. Here, if it is determined that the co-occurrence relation has value, the processing moves to step S46. On the other hand, if it is determined that the co-occurrence relation has no value, the processing ends because it is not valued to vicariously perform the action.

Next, in step S46, a message for confirming whether the action constituting the co-occurrence relation (transferring of the file) is valued is sent to the portable terminal 130.

In step S47, if a reply indicating that the action is valued is received from the portable terminal 130 that the user owns, the processing moves to step S48. On the other hand, if the reply indicating that the action is not valued is received, or no reply is received, the processing ends.

In step S48, for the action that is confirmed to be valued by the user (transferring of the file), the valued logic generation unit 16 generates a logic for automatically performing the action.

Then, in step S49, the application generation unit 17 generates a program based on the logic for performing the action of transferring the file to the backup server from the portable terminal 130.

In step S50, the inter-device coordination apparatus 10 itself automatically performs the action of transferring the file from the portable terminal 130 vicariously, based on the generated program.

Note that a program for causing another device to perform the action of transferring the file from the portable terminal 130 may be provided to the outside via the network 21 or the like. At this time, compensation for providing the program may be set.

### Other embodiments

One embodiment of the invention has been described above, but the invention is not limited to the above embodiment, and various modifications can be made without departing from the gist of the invention.

### A

In the above embodiment, the example in which the present invention is realized by the inter-device coordination apparatus 10 shown in Fig. 1 performing the inter-device coordination method in accordance with the flowcharts shown in Figs. 2, 10, and 18 is described. But, the present invention is not limited thereto.

For example, this invention may be realized as an inter-device coordination program that causes a computer to perform the inter-device coordination method in accordance with the flowcharts shown in Figs. 2, 10, and 18.

Alternatively, this invention may be realized as a recording medium that stores the inter-device coordination program.

In this case, the inter-device coordination program may be executed by the computer in another device, by the inter-device coordination program being provided to the other device via the Internet, for example.

Also, the inter-device coordination program may be executed by the computer in the other device, by the recording medium that stores the inter-device coordination program being provided to the other device as a medium and the program being installed, for example.

### B

In the above Embodiments 1 and 2, the examples are described in which the processing moves to the processing of the post stage after the presence or absence of the value of the co-occurrence relation has been confirmed the user, as shown in steps S26 and S27 in Fig. 10 and steps S46 and S47 in Fig. 18, when the inter-device coordination method is performed. But, the present invention is not limited thereto.

For example, the processing may move to the step S28 after the value determination in step S25 by omitting steps S26 and S27 in Embodiment 1, and the processing may move to the step S48 after the value determination in step S45 by omitting steps S46 and S47in Embodiment 2.

Note that, only the actions that are truly valued to the user can be vicariously performed, by forwarding the processing after the value of the co-occurrence relation has been confirmed to the user.

Also, after the value of the co-occurrence relation was confirmed to several different users, and if the result indicating "valued" is obtained at a certain rate or more, thereafter the confirmation of the value of the co-occurrence relation to the user may be omitted.

### C

In the above Embodiment 1, the example is described in which the action constituting the co-occurrence relation determined to be valued is once confirmed to the user before being performed, as shown in step S29 in Fig. 10, when the inter-device coordination method is performed. But, the present invention is not limited thereto.

For example, similar to Embodiment 2, the processing may move to step S31 by omitting steps S29 and S30, after the logic is generated in step S28 of Embodiment 1.

Note that, it is possible to vicariously perform the action at the truly valued timing for the user, by forwarding the processing after the permission or rejection for performing an action is confirmed to the user before the action is automatically performed vicariously.

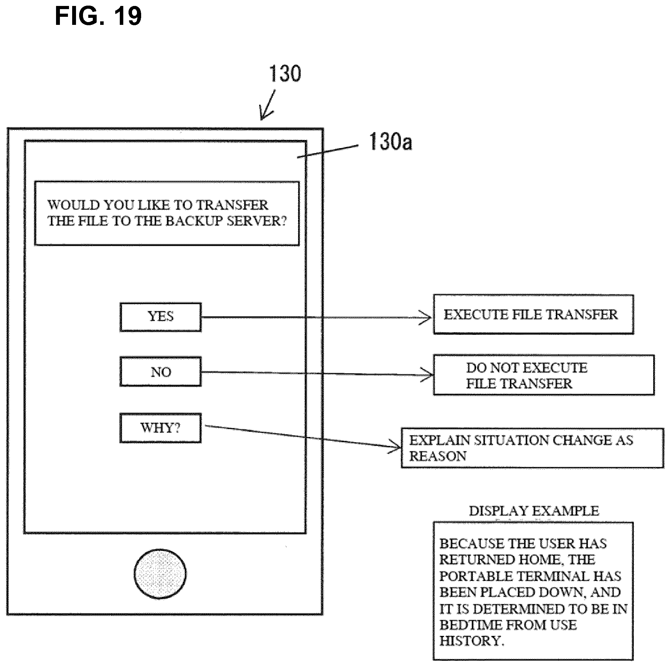

Also, in the above Embodiment 2, although the processes for confirming the action constituting the co-occurrence relation determined to be valued to the user are omitted before the action is performed, a message may be displayed in the display screen 130a of the portable terminal 130 as shown in Fig. 19, in a case where these processes are performed.

Specifically, as shown in Fig. 19, a message of "Transfer file to backup server?" is displayed, and the choices of "Yes", "No", and "Why?" are indicated below the message at the same time.

Here, if the user choices "Yes", the processing is proceeded such that the processing of transferring the file is performed. On the other hand, if the user choices "No", the processing ends without the action of transferring the file being performed, because the user determines that the transferring of the file is not necessary.

If the user choices "Why?", the user wants to know the reason why this inquiry is issued, for the action (transferring the file). Accordingly, the screen for describing the situation change is displayed, as the reason for the inquiry.

Specifically, as shown in Fig. 19, a message of "Because the user has returned home, the portable terminal has been placed down, and it is determined to be in bedtime from use history." may be displayed in the display screen 130a as the reason.

### D

In the above embodiments, the example is described in which the action of switching off the air conditioner 36a at the time when the conference room A 50a shown in Fig. 3 is used is set as the action in the present invention. But, the present invention is not limited thereto.

For example, the action of switching off the lighting apparatus 37a at the time when the conference room A 50a is used may be set as the action of the present invention.

In this case, the fact of the end of the use of the conference room A 50a may be detected by the detection results from the motion sensors 31aa and 31ab, the detection result from the temperature sensor 32a and the like.

Regarding the detection result from the temperature sensor 32a, for example, the fact of the end of use of the conference room A 50a may be detected by detecting the fact that the temperature in the room has lowered from 25°C to 18°C.

Also the fact that the use of the conference room A 50a ended may be detected by using the schedule management (the use schedule 41 of the conference room A) that is provided from the system 40. Alternatively, the fact that the use of the conference room A 50a ended may be detected by detecting that the consumption power of the conference room A 50a has lowered.

Furthermore, the end of use of the conference room may be detected by combining the above detection results from the sensors and the schedule management.

### E

In the above embodiments, the examples are described in which a situation change is detected and the co-occurrence relation including the specific action relating to this situation change is extracted, and a program for vicariously performing the action constituting the valued co-occurrence relation is generated and output to the outside. But, the present invention is not limited thereto.

For example, the control may be performed such that the inter-device coordination apparatus itself vicariously performs the action, without the program for vicariously performing the action being generated.

That is, at the time when the conference room A 50a shown in Fig. 3 is used, the air conditioner 36a may be controlled such that the inter-device coordination apparatus 10 vicariously performs the action, which is extracted as the valued co-occurrence relation (switching off the air conditioner 36a).

### F

In the above Embodiments 1 and 2, the examples are described in which the inter-device coordination apparatus 10 of the present invention is applied to the use of each of the conference room A 50a shown in Fig. 3 and the portable terminal 130 shown in Fig. 12. But, the present invention is not limited thereto.

For example, the inter-device coordination apparatus of the present invention may be applied to control of an air conditioner mounted in an automobile.

Specifically, a situation change in the automobile is detected by using a sensor that detects the number of people in an automobile and a temperature sensor that measures the temperature in the automobile, which are provided as the equipment 30, and this situation change and the co-occurrence relation constituted by the action corresponding to this situation change are extracted. Note that, a change in the preset temperature of the air conditioner, open/close of the widow of the rear seat, a change in the audio equipment setting, and the like are conceivable as an action constituting a co-occurrence relation corresponding to the situation change that occurred in the automobile, for example.

Note that the change in the number of the people in the automobile may be detected by using an image in which the inside of the automobile is captured, instead of using the sensor.

Then, it is determined whether the extracted co-occurrence relation has value, and in the case where the extracted co-occurrence relation is determined to be valued, if the situation change in the automobile satisfies a certain condition, based on the logic that is generated to performing an action determined to have the co-occurrence relation, the action is performed.

For example, if the fact the number of people boarding the automobile increased from one to four is detected, it is assumed that the temperature in the automobile rises, and thus it is sufficient that a control is automatically made such that the temperature setting of the air conditioner lowers by three degrees from the current set temperature, so that the temperature inside of the automobile does not rise automatically.

In this manner, the setting of the temperature of the air conditioner can be automatically changed to a preferable temperature, before the driver changes the set temperature after he or she feels that the inside of the car is hot, or the actual measured temperature inside of the automobile rises.

Note that, similar to the above Embodiments 1 and 2, the program that is generated based on the logic for automatically performing the preferable behavior of changing the set temperature of the air conditioner may be provided to another device and so on via the network.

In this case, compensation for providing the program may be set.

Also, the set temperature that is preferred by each of the drivers is stored in the database and so on in advance from the use history or the like, and, when the change in the driver is occurred as the situation change, the control in which the temperature in the automobile may be automatically changed to the temperature preferred by that driver.

### G

In the above Embodiments 1 and 2, the examples are described in which the inter-device coordination apparatus 10 of the present invention is applied to the use of each of the conference room A 50a shown in Fig. 3 and the portable terminal 130 shown in Fig. 12. But, the present invention is not limited thereto.

For example, the inter-device coordination apparatus of the present invention may be applied to the life of an elderly person who lives alone.

Specifically, a situation change is detected by using a motion sensor that detects the elderly person who is at home and the location (room) of the elderly person, an electric energy sensor that detects the use situation of electric appliances that the elderly person uses, and a temperature sensor that measures a temperature of a living room, as the equipment 30. After that, the co-occurrence relation constituted by this situation change and the action (contacting relatives) corresponding to this situation change is extracted.

Then, it is determined whether the extracted co-occurrence relation has value, if it is determined that the extracted co-occurrence relation has value, and in the case where the situation change occurred in the house of the elderly person does not satisfy a predetermined condition, contacting the relatives is automatically performed, based on a logic generated for contacting a portable terminal of the relatives by making a call or sending a mail.

For example, if it is detected that the power consumption does not increase in a time zone in which the electric appliances are to be used from the past life pattern of the elderly person, because there is a possibility that an abnormality occurs in the elderly person, the portable terminal that the elderly person owns, the electric appliances that have a communication function or the like may be controlled so as to automatically perform contacting the relatives by sending a mail and so on.

In this manner, it is possible to watch over the elderly person from a remote place.

Note that the target to be watched over may be a pet such as a dog or a cat, other than the elderly.

Also, this type of watching over function can be applied to crime preventing of a house or an office while an occupant or staff is out.

If a situation change that satisfies a predetermined condition in the house or the office occurs (opening/closing of a door, or switching on of a motion sensor in the room occurred while the occupant or the staff are out, etc.), the action of contacting the portable terminal of the user, a police officer, a security company or the like may be automatically performed.

Note that the present invention can also be described as follows.

### Supplementary Remark 1

An inter-device coordination apparatus in a sensor network, including:
a memory and at least one processor connected to the memory,
wherein the network is configured such that the processor:
   detects an action performed by a person,
   detects an environment including the person,
   detects a change in a state of the environment including the person, and
   extracts, for the action and the situation change, an action and a situation change that co-occurs temporally or spatially as a set in a co-occurrence relation.

### Supplementary Remark 2

A method including:
a step of detecting an action performed by a person, with at least one processor;
a step of detecting a state of an environment including the person, with at least one processor;
a step of detecting a change in the state of the environment including the person, with at least one processor; and
a step of extracting, for the action and the situation change, an action and a situation change that co-occurs temporally or spatially as a set in a co-occurrence relation, with at least one processor.

### INDUSTRIAL APPLICABILITY

An inter-device coordination apparatus in a sensor network of the present invention provides an effect that even a general user who has no specialized knowledge can realize valued behavior by showing desirable behavior through an action, and thus can be widely applied to various types of systems including multiple devices that are connected with each other via a network.

### INDEX TO THE REFERENCE NUMERALS

10 inter-device coordination apparatus (inter-device coordination apparatus in sensor network)
11 action detection unit
12 state information detection unit
13 situation change detection unit
14 co-occurrence relation extraction unit
15 value determination unit
16 valued logic generation unit
17 application generation unit
18 output unit
20 database
21 network
22 execution form distribution apparatus
30 equipment (various sensors)
31aa to 31ca motion sensor (in room)
31ab to 31cb motion sensor (at passageway)
32a to 32c temperature sensor
33a to 33c door open/close sensor
34a to 34c illuminance sensor
35a to 35c electric energy sensor
36a to 36c air conditioner
37a to 37c lighting apparatus
40 system
41 use schedule of conference room A
42 use schedule of conference room B
43 use schedule of conference room C
50a conference room A
50b conference room B
50c conference room C
51a to 51c door
52a to 52c table
53a to 53c chair
54a to 54c whiteboard
55a to 55c switch panel
60 portable terminal
60a display screen
130 portable terminal
130a display screen
131 acceleration sensor
132 temperature sensor
133 location detection sensor (GPS)
140 system
141 use history of portable terminal
142 various Web sites
143 application
P passageway

## Claims

1. An inter-device coordination apparatus in a sensor network comprising:
an action detection unit configured to detect an action performed by a person;
a state information detection unit configured to detect a state of an environment including the person;
a situation change detection unit configured to detect a change in the state of the environment including the person that is detected by the state information detection unit; and
a co-occurrence relation extraction unit configured to extract, for the action that is detected by the action detection unit and the situation change that is detected by the situation change detection unit, an action and a situation change that co-occur temporally or spatially as a set in a co-occurrence relation.

2. The inter-device coordination apparatus in the sensor network according to claim 1, further comprising:
a value determination unit configured to determine presence or absence of value relating to the co-occurrence relation that is extracted by the co-occurrence relation extraction unit.

3. The inter-device coordination apparatus in the sensor network according to claim 2, further comprising:
a valued logic generation unit configured to generate, when the value determination unit determines that the co-occurrence relation has value, a logic for automatically performing an operation corresponding to the action detected by the action detection unit, if a detection result from the situation change detection unit satisfies a predetermined condition.

4. The inter-device coordination apparatus in the sensor network according to claim 3, further comprising:
an output unit configured to output the logic that is generated by the valued logic generation unit.

5. The inter-device coordination apparatus in the sensor network according to claim 4,
wherein the output unit outputs, to the user, information including a proposal for vicariously performing the action based on the logic generated by the valued logic generation unit.

6. The inter-device coordination apparatus in the sensor network according to claim 4 or 5, further comprising:
a value determination unit configured to determine presence or absence of value regarding the co-occurrence relation that is extracted by the co-occurrence relation extraction unit,
wherein the output unit outputs a message for confirming, with the user, the presence or absence of value relating to the co-occurrence relation that is provisionally determined by the value determination unit.

7. The inter-device coordination apparatus in the sensor network according to any one of claims 3 to 6, further comprising:
an application generation unit configured to generate a program based on the logic that is generated by the valued logic generation unit.

8. The inter-device coordination apparatus in the sensor network according to claim 2,
wherein the value determination unit determines the presence or absence of value relating to the co-occurrence relation, according to whether a percentage at which the action occurs in conjunction with the situation change is equal to or higher than a predetermined threshold value.

9. The inter-device coordination apparatus in the sensor network according to any one of claims 1 to 8,
wherein the action detection unit detects the action performed by the person, based on data that is provided to an external database.

10. The inter-device coordination apparatus in the sensor network according to any one of claims 1 to 9,
wherein information specifying time or space is added as meta-information to the data used by the action detection unit.

11. The inter-device coordination apparatus in the sensor network according to any one of claims 1 to 10,
wherein the situation change detection unit detects the situation change by using a detection result acquired by at least one of a motion sensor, a temperature sensor, an illuminance sensor, an electric energy sensor, an acceleration sensor, an air conditioner, and a location information sensor.

12. The inter-device coordination apparatus in the sensor network according to any one of claims 1 to 11,
wherein the situation change detection unit detects the situation change by using information that is acquired by a schedule management system configured to manage various schedules.

13. The inter-device coordination apparatus in the sensor network according to any one of claims 1 to 12,
wherein the situation change detection unit detects, regarding the state of the environment including the person that is detected by the state information detection unit, a change in data in time series as the situation change.

14. An inter-device coordination method in a sensor network, comprising:
an action detection step of detecting an action performed by a person;
a state information detection step of detecting a state of an environment including the person;
a situation change detection step of detecting a change in the state of the environment including the person that is detected by the state information detection step; and
a co-occurrence relation extraction step of extracting, for the action that is detected by the action detection step and the situation change that is detected by the situation change detection step, an action and a situation change that co-occur temporally or spatially as a set in a co-occurrence relation.

15. An inter-device coordination program that causes a computer to perform an inter-device coordination method in the sensor network, the method comprising:
an action detection step of detecting an action performed by a person;
a state information detection step of detecting a state of an environment including the person;
a situation change detection step of detecting a change in the state of the environment including the person that is detected by the state information detection step; and
a co-occurrence relation extraction step of extracting, for the action that is detected by the action detection step and the situation change that is detected by the situation change detection step, an action and a situation change that co-occur temporally or spatially as a set in a co-occurrence relation.

16. A recording medium that stores the inter-device coordination program in the sensor network according to claim 15.
